# EUROPÄISCHE PATENTANMELDUNG

(11) **EP 3 904 415 A1**
(43) Veröffentlichungstag der Anmeldung: **03.11.2021**
(21) Anmeldenummer: 20172353.3
(22) Anmeldetag: 30.04.2020
(51) Int. Cl.: C08G 18/08, C08G 18/42, C08G 18/44, C08G 18/48, C08G 18/73, C08G 18/75

(54) **NEUES HERSTELLVERFAHREN MITTELS STATIKMISCHER FÜR EIN TPU**

(71) Anmelder: BASF SE, 67056 Ludwigshafen am Rhein (DE)
(72) Erfinder: FREESE, Michael, 49448 Lemfoerde (DE); POESELT, Elmar, 49448 Lemfoerde (DE); ENGLISCH, Patricia, 49448 Lemfoerde (DE)
(74) Vertreter: Altmann Stößel Dick Patentanwälte PartG mbB

(57) **Zusammenfassung**

Die vorliegende Erfindung betrifft ein Verfahren zur Herstellung eines thermoplastischen Polyurethans umfassend die Umsetzung einer Isocyanatzusammensetzung (IZ) enthaltend ein Diisocyanat (I1) mit einer Polyolzusammensetzung (PZ), wobei die Umsetzung in mindestens zwei in Reihe geschalteten Statikmischern erfolgt und der erste Statikmischer (S1) einen Durchmesser (d1) aufweist und der zweite Statikmischer (S2) einen Durchmesser (d2), wobei der Durchmesser (d2) größer ist als der Durchmesser (d1). Weiterhin betrifft die vorliegende Erfindung ein thermoplastisches Polyurethan, erhalten oder erhältlich gemäß dem erfindungsgemäßen Verfahren sowie die Verwendung eines erfindungsgemäß erhältlichen thermoplastischen Polyurethans oder eines erfindungsgemäßen thermoplastischen Polyurethans zur Herstellung von Extrusionsprodukten, beispielsweise zur Herstellung von Folien, Profilen, Kabeln, sowie Ummantelungen, beispielsweise von LED Bändern, Steinschlagschutzfolien oder auch Laminatbeschichtungen.

## Beschreibung

Die vorliegende Erfindung betrifft ein Verfahren zur Herstellung eines thermoplastischen Polyurethans umfassend die Umsetzung einer Isocyanatzusammensetzung (IZ) enthaltend ein Diisocyanat (I1) mit einer Polyolzusammensetzung (PZ), wobei die Umsetzung in mindestens zwei in Reihe geschalteten Statikmischern erfolgt und der erste Statikmischer (S1) einen Durchmesser (d1) aufweist und der zweite Statikmischer (S2) einen Durchmesser (d2), wobei der Durchmesser (d2) größer ist als der Durchmesser (d1). Weiterhin betrifft die vorliegende Erfindung ein thermoplastisches Polyurethan, erhalten oder erhältlich gemäß dem erfindungsgemäßen Verfahren sowie die Verwendung eines erfindungsgemäß erhältlichen thermoplastischen Polyurethans oder eines erfindungsgemäßen thermoplastischen Polyurethans zur Herstellung von Extrusionsprodukten, beispielsweise zur Herstellung von Folien, Profilen, Kabeln, sowie Ummantelungen, beispielsweise von LED Bändern, Steinschlagschutzfolien oder auch Laminatbeschichtungen.

Thermoplastische Polyurethane (TPU) sind von großer technischer Bedeutung, weil sie ausgezeichnete mechanische Eigenschaften besitzen und sich kostengünstig thermoplastisch verarbeiten lassen. Durch die Variation der Einsatzstoffe können unterschiedliche Eigenschaftsprofile erhalten werden. Der Aufbau der thermoplastisch verarbeitbaren Polyurethanelastomeren kann entweder schrittweise (Prepolymerdosierverfahren) oder durch die gleichzeitige Reaktion aller Komponenten in einer Stufe (one-shot-Dosierverfahren) erfolgen. Thermoplastische Polyurethane für verschiedene Anwendungen sind aus dem Stand der Technik grundsätzlich bekannt.

So wird beispielsweise in DE 19625987 A1 ein Verfahren zur kontinuierlichen Herstellung von thermoplastisch verarbeitbaren Polyurethanen offenbart, bei dem in einer mehrstufigen Umsetzung schrittweise das Isocyanat zugesetzt wird.

Insbesondere thermoplastische Polyurethane auf Basis aliphatischer Isocyanate haben den Vorteil einer besonders guten Lichtechtheit. Diese sogenannten aliphatischen thermoplastischen Polyurethane finden zunehmend Anwendung bei der Herstellung von lichtstabilen und farbechten Formteilen wie z. B. Spritzgussteilen jeglicher Form, Folien, Schläuche, Kabel oder Sinterfolien wie etwa Oberflächen von Instrumententafeln.

So beschreibt die die EP 1 010 712 A1 aliphatische, thermoplastische Polyurethane, die erhältlich sind aus Hexamethylendiisocyanat (HDI) als Diisocyanat-Komponente, Polyesterpolyolen, Kettenverlängerern und UV-Stabilisatoren. Als Kettenverlängerer werden 1,6- Hexandiol oder Gemische aus 80 bis 100 Gew.-% 1 ,6-Hexandiol und 0 bis 20 Gew.-% Kettenverlängerern mit einem mittleren Molekulargewicht von 60 bis 500 g/mol eingesetzt. Auch thermoplastische Polyurethane basierend auf aliphatischen Isocyanaten bestechen durch ihre hohe Transparenz bei gleichzeitig sehr gutem mechanischem Niveau sowie einer äußerst geringen Neigung zur Vergilbung. Deswegen werden diese Materialien häufig zu Folien verarbeitet und als Schutzfilm auf verschiedene andere Materialien aufgetragen. Unter anderem werden diese Folien als Steinschlagschutz oder auch als Laminatbeschichtung verwendet. Ein weiterer Anwendungsbereich für derartige Folien sind transparente Mehrschichtverbunde. Dabei dienen die Folien zum Verkleben von z.B. Glas mit Polycarbonatschichten zur Herstellung von z.B. schusssicherem Glas.

Auch die Herstellung dieser thermoplastischen Polyurethane basierend auf aliphatischen Diisocyanaten ist Stand der Technik. Wegen der Reaktionsträgheit des H12MDI werden die Materialien häufig im diskontinuierlichen Gießverfahren hergestellt und die gegossenen Blöcke nach der abgeschlossenen Reaktion dann anschließend zweckmäßig zerkleinert. Die Zweistufigkeit des Verfahrens ist hier nachteilig.

Auch die kontinuierliche Herstellung mit einem Reaktionsextruder mit anschließender Unterwassergranulierung ist an sich bekannt. Dieses Herstellverfahren ist wegen der Einstufigkeit und den damit verbundenen verringerten Kosten gegenüber mehrstufigen Verfahren vorteilhaft.

Dabei sind jedoch die Verweilzeiten der einzelnen Reaktanden im Extruder häufig nicht ausreichend, so dass zwar eine granulierfähige Schmelze erhalten wird, aber die Polymerreaktion nicht abgeschlossen werden kann. In der erhaltenen Schmelze liegen dann noch unreagierte Isocyanate sowie Alkohole vor. In der Unterwassergranulierung wird diese Schmelze dann schlagartig abgekühlt, so dass eine Weiterreaktion der Alkohole und Isocyanate bei Raumtemperatur nur sehr langsam von statten geht.

Wegen der unvollständigen Reaktion hat das erhaltene thermoplastische Polyurethan nur ein geringes Molekulargewicht und die Granulate neigen dazu, Agglomerate zu bilden und generell zu verkleben. Das führt zu Problemen bei der Förderung und Lagerung des Granulates.

Weiterhin hat die unvollständige Reaktion zur Folge, dass das erhaltene Granulat gelagert werden muss. Aufgrund der Materialeigenschaften führt eine Lagerung bei erhöhten Temperaturen zu einem Verkleben, so dass das erhaltene thermoplastische Polyurethan für eine lange Zeit bei niedrigen Temperaturen gelagert werden muss, bis ein zur Weiterverarbeitung ausreichendes Molekulargewicht erreicht wird.

Durch Verwendung von Katalysatoren kann der Molekulargewichstaufbau beschleunigt werden, allerdings wird dabei auch die Vernetzung des TPUs katalysiert. sodass die Extrusionsqualität vor allem bei den HDI basierten TPUs sehr stark leidet.

Somit lag eine der vorliegenden Erfindung zugrunde liegende Aufgabe darin, ein Verfahren zur Herstellung eines thermoplastischen Polyurethans basierend bereitzustellen, mit dem das thermoplastische Polyurethan kontinuierlich in einfacher Weise hergestellt werden kann. Eine weitere Aufgabe lag darin, thermoplastische Polyurethane bereitzustellen, die eine verringerter Klebeneigung aufweisen.

Erfindungsgemäß wird diese Aufgabe gelöst durch ein Verfahren zur Herstellung eines thermoplastischen Polyurethans umfassend die Umsetzung einer Isocyanatzusammensetzung (IZ) enthaltend ein Diisocyanat (I1) mit einer Polyolzusammensetzung (PZ), wobei die Umsetzung in mindestens zwei in Reihe geschalteten Statikmischern erfolgt und der erste Statikmischer (S1) einen Durchmesser (d1) aufweist und der zweite Statikmischer (S2) einen Durchmesser (d2), wobei der Durchmesser (d2) größer ist als der Durchmesser (d1).

Erfindungsgemäß erfolgt die Umsetzung der Isocyanatzusammensetzung (IZ) mit der Polyolzusammensetzung (PZ) in mindestens zwei in Reihe geschalteten Statikmischern. Geeignete Apparaturen bzw. geeignete Statikmischer sind dem Fachmann an sich bekannt.

Erfindungsgemäß erfolgt die Umsetzung in mindestens zwei in Reihe geschalteten Statikmischern. Vorzugsweise sind die im Rahmen der vorliegenden Erfindung eingesetzten Statikmischer beheizbar. Die erfindungsgemäß eingesetzten Statikmischer haben den Vorteil, dass sie keine beweglichen Teile aufweisen und dass eine homogene, nahezu rückvermischungsfreie Durchmischung in kürzester Zeit erfolgt. Erfindungsgemäß einsetzbare Statikmischer sind beispielsweise beschrieben in Chem.-Ing. Techn. 52, Nr.4 auf den Seiten 285-291 sowie in "Mischen von Kunststoff und Kautschukprodukten", VDI-Verlag, Düsseldorf 1993. Geeignete Statikmischer werden beispielsweise auch beschriebene in DE 23 28 795 A1. Geeignet sind beispielsweise Statikmischer der Firma Sulzer, beispielsweise Statikmischer mit 6 bis 10 Mischelementen und beispielsweise einer Scherrate von 500 s⁻¹.

Erfindungsgemäß können geeignete Statikmischer beispielsweise ein Verhältnis von Länge zu Durchmesser im Bereich von 8:1 bis 16:1 aufweisen, besonders bevorzugt im Bereich von 10:1 bis 14:1.

Überraschend wurde gefunden, dass es durch die Verwendung von mindestens zwei Statikmischern, die in Reihe geschaltet sind und deren Durchmesser steigt, möglich ist, hohe Verweilzeiten bei der TPU Produktion zu erzielen, so dass die Umsetzung mit geringen Katalysatormenge, beispielsweise von weniger als 1% durchgeführt werden kann. Durch die Verbreiterung der Statikmischer kann dem Druckaufbau hervorgerufen durch den Viskositätsanstieg entgegengewirkt werden. Das erfindungsgemäße Verfahren erlaubt weiterhin eine Temperaturführung, bei der die Reaktion bei einer niedrigen Temperatur möglich ist, sodass Vernetzungsreaktionen zusätzlich unterdrückt werden.

Erfindungsgemäß wird die Isocyanatzusammensetzung (IZ) mit der Polyolzusammensetzung (PZ) unter Erhalt einer Schmelze umgesetzt. Dabei sind im Rahmen der vorliegenden Erfindung alle geeigneten Verfahren einsetzbar, bei denen die Komponenten unter Erhalt einer Schmelze umgesetzt werden können. So kann die Umsetzung beispielsweise bei erhöhter Temperatur erfolgen, um eine Schmelze zu erhalten.

Erfindungsgemäß ist der Durchmesser (d2) größer als der Durchmesser (d1). Dabei kann der Durchmesser (d2) beispielweise um mindestens 30% größer sein als der Durchmesser (d1), bevorzugt um 30% bis 50% größer als der Durchmesser (d1). Weiter bevorzugt ist der Durchmesser (d2) um 35% bis 45% größer als der Durchmesser (d1).

Gemäß einer weiteren Ausführungsform betrifft die vorliegende Erfindung demgemäß auch ein Verfahren wie zuvor beschrieben, wobei der Durchmesser (d2) mindestens um 30% größer ist als der Durchmesser (d1).

Demgemäß betrifft die vorliegende Erfindung auch ein Verfahren zur Herstellung eines thermoplastischen Polyurethans umfassend die Umsetzung einer Isocyanatzusammensetzung (IZ) enthaltend ein Diisocyanat (I1) mit einer Polyolzusammensetzung (PZ), wobei die Umsetzung in mindestens zwei in Reihe geschalteten Statikmischern erfolgt und der erste Statikmischer (S1) einen Durchmesser (d1) aufweist und der zweite Statikmischer (S2) einen Durchmesser (d2), wobei der Durchmesser (d2) größer ist als der Durchmesser (d1), wobei der Durchmesser (d2) mindestens um 30% größer ist als der Durchmesser (d1).

Erfindungsgemäß werden die Reaktionsbedingungen so eingestellt, dass ein möglichst kontinuierliches Strömungsprofil über den Verlauf der Umsetzung in den Statikmischern (S1) und (S2) erreicht wird. Erfindungsgemäß kann so ein möglichst gleichmäßiger Molekulargewichtsaufbau erreicht werden.

Der erfindungsgemäße Aufbau gestattet sowohl eine Präpo- als auch One-Shot-Fahrweise. Es kann vorteilhaft sein, das Verfahren kontinuierlich, beispielsweise als Inline-one-shot Verfahren zu führen. Demgemäß betrifft die vorliegende Erfindung gemäß einer weiteren Ausführungsform auch ein thermoplastisches Polyurethan wie zuvor beschrieben, wobei das Verfahren kontinuierlich geführt wird.

Beispielsweise kann das erfindungsgemäße Verfahren so geführt werden, dass zunächst in einer geeigneten Vorrichtung, beispielsweise in einem Mischer, die Isocyanatzusammensetzung (IZ) und die Polyolzusammensetzung (PZ) unter Erhalt einer Mischung (M1) gemischt werden. Anschließend kann die Umsetzung der Mischung (M1) in dem ersten Statikmischer (S1) unter Erhalt einer Mischung (M2) erfolgen. Die Mischung (M2) wird vorzugsweise in den Statikmischer (S2) überführt, wobei dann eine weitere Umsetzung der Mischung (M2) in dem Statikmischer (S2) unter Erhalt einer Mischung (M3) erfolgt. Die bei der Umsetzung erhaltene Mischung liegt üblicherweise in Form einer Schmelze vor. Die Schmelze kann im Anschluss entweder direkt granuliert oder in einen Extruder oder auf ein Band geleitet werden, um einen weiteren Molekulargewichtsaufbau zu erreichen.

Gemäß einer weiteren Ausführungsform betrifft die vorliegende Erfindung demgemäß auch ein Verfahren wie zuvor beschrieben, wobei das Verfahren die Schritte (i) bis (iii) umfasst:
(i) Mischen der Isocyanatzusammensetzung (IZ) enthaltend ein Diisocyanat (I1) und der Polyolzusammensetzung (PZ);
(ii.1) Umsetzung der Mischung (M1) in dem ersten Statikmischer (S1) unter Erhalt einer Mischung (M2);
(ii.2) Umsetzung der Mischung (M2) in dem Statikmischer (S2) unter Erhalt einer Mischung (M3);
(iii) Granulieren der in Schritt (ii) erhaltenen Mischung.

Im Rahmen der vorliegenden Erfindung ist es auch möglich, einen oder mehrere weitere Statikmischer einzusetzen. Bevorzugt wird ein dritter Statikmischer (S3) mit einem Durchmesser (d3) eingesetzt, wobei vorzugsweise der Durchmesser (d3) größer ist als der Durchmesser (d2).

Gemäß einer weiteren Ausführungsform betrifft die vorliegende Erfindung demgemäß auch ein Verfahren wie zuvor beschrieben, wobei ein dritter Statikmischer (S3) mit einem Durchmesser (d3) eingesetzt wird.

Erfindungsgemäß ist der Durchmesser (d3) vorzugsweise größer als der Durchmesser (d2). Dabei kann der Durchmesser (d3) beispielweise um mindestens 30% größer sein als der Durchmesser (d2), bevorzugt um 30% bis 50% größer als der Durchmesser (d2). Weiter bevorzugt ist der Durchmesser (d3) um 35% bis 45% größer als der Durchmesser (d2).

Gemäß einer weiteren Ausführungsform betrifft die vorliegende Erfindung demgemäß auch ein Verfahren wie zuvor beschrieben, wobei der Durchmesser (d3) mindestens um 30% größer ist als der Durchmesser (d2).

Üblicherweise wird im Statikmischer (S3) die im Statikmischer (S2) erhaltene Mischung eingesetzt. Dabei wird bei der Umsetzung im Statikmischer (S3) eine Mischung (M4) erhalten.

Gemäß einer weiteren Ausführungsform betrifft die vorliegende Erfindung demgemäß auch ein Verfahren wie zuvor beschrieben, wobei das Verfahren die Schritte (i) bis (iii) umfasst:
(i) Mischen der Isocyanatzusammensetzung (IZ) enthaltend ein Diisocyanat (I1) und der Polyolzusammensetzung (PZ);
(ii.1) Umsetzung der Mischung (M1) in dem ersten Statikmischer (S1) unter Erhalt einer Mischung (M2);
(ii.2) Umsetzung der Mischung (M2) in dem Statikmischer (S2) unter Erhalt einer Mischung (M3);
(ii.3) Umsetzung der Mischung (M3) in dem Statikmischer (S3) unter Erhalt einer Mischung (M4);
(iii) Granulieren der in Schritt (ii) erhaltenen Mischung.

Weiterhin betrifft die vorliegende Erfindung auch ein Verfahren zur Herstellung eines thermoplastischen Polyurethans umfassend die Umsetzung einer Isocyanatzusammensetzung (IZ) enthaltend ein Diisocyanat (I1) mit einer Polyolzusammensetzung (PZ), wobei die Umsetzung in mindestens zwei in Reihe geschalteten Statikmischern erfolgt und der erste Statikmischer (S1) einen Durchmesser (d1) aufweist und der zweite Statikmischer (S2) einen Durchmesser (d2), wobei der Durchmesser (d2) größer ist als der Durchmesser (d1),
wobei der Durchmesser (d2) mindestens um 30% größer ist als der Durchmesser (d1) und das Verfahren die Schritte (i) bis (iii) umfasst:
(i) Mischen der Isocyanatzusammensetzung (IZ) enthaltend ein Diisocyanat (I1) und der Polyolzusammensetzung (PZ);
(ii.1) Umsetzung der Mischung (M1) in dem ersten Statikmischer (S1) unter Erhalt einer Mischung (M2);
(ii.2) Umsetzung der Mischung (M2) in dem Statikmischer (S2) unter Erhalt einer Mischung (M3);
(iii) Granulieren der in Schritt (ii) erhaltenen Mischung.

Weiterhin betrifft die vorliegende Erfindung auch ein Verfahren zur Herstellung eines thermoplastischen Polyurethans umfassend die Umsetzung einer Isocyanatzusammensetzung (IZ) enthaltend ein Diisocyanat (I1) mit einer Polyolzusammensetzung (PZ), wobei die Umsetzung in mindestens zwei in Reihe geschalteten Statikmischern erfolgt und der erste Statikmischer (S1) einen Durchmesser (d1) aufweist und der zweite Statikmischer (S2) einen Durchmesser (d2), wobei der Durchmesser (d2) größer ist als der Durchmesser (d1),
wobei ein dritter Statikmischer (S3) mit einem Durchmesser (d3) eingesetzt wird, und der Durchmesser (d3) mindestens um 30% größer ist als der Durchmesser (d2), wobei das Verfahren die Schritte (i) bis (iii) umfasst:
(i) Mischen der Isocyanatzusammensetzung (IZ) enthaltend ein Diisocyanat (I1) und der Polyolzusammensetzung (PZ);
(ii.1) Umsetzung der Mischung (M1) in dem ersten Statikmischer (S1) unter Erhalt einer Mischung (M2);
(ii.2) Umsetzung der Mischung (M2) in dem Statikmischer (S2) unter Erhalt einer Mischung (M3);
(ii.3) Umsetzung der Mischung (M3) in dem Statikmischer (S3) unter Erhalt einer Mischung (M4);
(iii) Granulieren der in Schritt (ii) erhaltenen Mischung.

Das erfindungsgemäße Verfahren kann dabei weitere Schritte, beispielsweise Lagerung oder Temperaturanpassungen umfassen. So kann das Verfahren weitere Behandlungsschritte vor und/oder nach den Schritten (i), (ii) und (iii) umfassen oder auch eine Behandlung zwischen den Schritten (i) und (ii) oder zwischen den Schritten (ii) und (iii). Auch weitere Schritte zwischen den Schritten (ii.1), (ii.2) und/oder (ii.3) sind im Rahmen der vorliegenden Erfindung möglich. Im Rahmen der vorliegenden Erfindung können neben den genannten Komponenten und Zusammensetzungen auch weitere Verbindungen eingesetzt werden.

Insbesondere kann das erfindungsgemäße Verfahren Lagerungs- und/oder Temperungsschritte umfassen. Beispielsweise kann die Temperung bei Temperaturen im Bereich von 30 bis 40°C erfolgen.

Das erfindungsgemäße Verfahren kann gemäß einer weiteren Ausführungsform einen Schritt (iv) umfassen:
(iv) Lagerung des gemäß Schritt (iii) erhaltenen Granulats.

Geeignete Bedingungen für eine Lagerung sind dem Fachmann abhängig von den eingesetzten Komponenten grundsätzlich bekannt.

Nach der Lagerung gemäß Schritt (iv) wird vorzugsweise ein Granulat mit höherem Molekulargewicht erhalten, d.h. während der Lagerung gemäß Schritt (iv) erfolgt vorzugsweise eine Weiterreaktion.

Erfindungsgemäß kann die Lagerung beispielsweise bei einer Temperatur im Bereich von 20 bis 40°C erfolgen. Dabei kann die Lagerung für eine Zeit im Bereich von 1 bis 100 Tagen erfolgen, beispielsweise für eine Zeit im Bereich von 60 bis 90 Tagen.

Ebenso ist es im Rahmen der vorliegenden Erfindung möglich, dass die Lagerung gemäß Schritt (iv) bei einer erhöhten Temperatur, beispielsweise bei einer Temperatur im Bereich von 50 bis 90°C erfolgt. Im Rahmen dieser Ausführungsform erfolgt die Lagerung beispielsweise für eine Zeit im Bereich von 5 bis 48 Stunden.

Erfindungsgemäß kann beispielsweise die Temperatur und Reaktionsdauer aber auch die Mischgüte variiert werden. Erfindungsgemäß ist es möglich, dass vor der Umsetzung in den Statikmischern (S1) und (S2) ein Vormischen der eingesetzten Komponenten erfolgt, beispielsweise gemäß Schritt (i). Beispielsweise kann Schritt (i) bei einer Temperatur im Bereich von 45 bis 70°C durchgeführt werden, bevorzugt im Bereich von 50 bis 65°C, besonders bevorzugt im Bereich von 55 bis 60°C.
Gemäß einer weiteren Ausführungsform betrifft die vorliegende Erfindung demgemäß auch ein Verfahren wie zuvor beschrieben, wobei Schritt (i) bei einer Temperatur im Bereich von 45 bis 70°C durchgeführt wird.

Geeignete Bedingungen für die Umsetzung in den Statikmischern sind dem Fachmann an sich bekannt. Beispielsweise kann erfindungsgemäß die Temperatur im Statikmischer (S1) im Bereich von 70 bis 170°C liegen, bevorzugt im Bereich von 70 bis 150°C, weiter bevorzugt im Bereich von 80 bis 140°C. Erfindungsgemäß kann die Temperatur im Statikmischer (S2) im Bereich von 130 bis 170°C liegen, bevorzugt im Bereich von 140 bis 170°C, weiter bevorzugt im Bereich von 150 bis 160°C.

Gemäß einer weiteren Ausführungsform betrifft die vorliegende Erfindung demgemäß auch ein Verfahren wie zuvor beschrieben, wobei die Temperatur im Statikmischer (S1) im Bereich von 70 bis 170°C liegt und die Temperatur im Statikmischer (S2) im Bereich von 130 bis 170°C.

Erfindungsgemäß enthält die Isocyanatzusammensetzung (IZ) mindestens ein Diisocyanat (I1). Geeignete Diisocyanate sind dem Fachmann an sich bekannt. Erfindungsgemäß wird mindestens ein Diisocyanat eingesetzt. Erfindungsgemäß können auch Mischungen aus zwei oder mehr Diisocyanaten eingesetzt werden. Ebenso ist es möglich, Mischungen enthaltend Diisocyanate und höherfunktionelle Isocyanate einzusetzen. Bevorzugte Diisocyanate, sind im Rahmen der vorliegenden Erfindung insbesondere aliphatische oder aromatische Diisocyanate, weiter bevorzugt aliphatische und alicyclische Diisocyanate.

Gemäß einer weiteren Ausführungsform betrifft die vorliegende Erfindung demgemäß auch ein Verfahren wie zuvor beschrieben, wobei das Diisocyanat (I1) ausgewählt ist aus der Gruppe bestehend aus aliphatischen und alicyclischen Diisocyanaten.

Als aliphatische Diisocyanate werden übliche aliphatische und/oder cycloaliphatische Diisocyanate eingesetzt, beispielsweise Tri-, Tetra-, Penta-, Hexa-, Hepta- und/oder Oktamethylendiisocyanat, 2-Methylpentamethylen-1,5-diisocyanat, 2-Ethyltetramethylen-1,4-diisocyanat, Hexamethylen-1,6-diisocyanat (HDI), Pentamethylen-1,5-diisocyanat, Butylen-1,4-diisocyanat, Trimethylhexamethylen-1,6-diisocyanat, 1-lsocyanato-3,3,5-trimethyl-5-isocyanatomethyl-cyclohexan (Isophoron-diisocyanat, IPDI), 1,4- und/oder 1,3-Bis(isocyanatomethyl)cyclohexan (HXDI), 1,4-Cyclohexandiisocyanat, 1-Methyl-2,4- und/oder 1-Methyl-2,6-cyclohexandiisocyanat, 4,4'-, 2,4'- und/oder 2,2'-Methylendicyclohexyldiisocyanat (H12MDI).

Bevorzugte aliphatische Diisocyanate sind Hexamethylen-1,6-diisocyanat (HDI), 1-Isocyanato-3,3,5-trimethyl-5-isocyanatomethyl-cyclohexan und 4,4'-, 2,4'- und/oder 2,2'-Methylendicyclohexyldiisocyanat (H12MDI); insbesondere bevorzugt sind 4,4'-, 2,4'- und/oder 2,2'-Methylendicyclohexyldiisocyanat (H12MDI) und 1-Isocyanato-3,3,5-trimethyl-5-isocyanatomethyl-cyclohexan oder Mischungen davon.

Geeignete aromatische Diisocyanate sind insbesondere 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), 3,3'-Dimethyl-4,4'-Diisocyanato-Diphenyl (TODI), p-Phenylendiisocyanat (PDI), Diphenylethan-4,4'-diisoyanat (EDI), Diphenylmethandiisocyanat, 3,3'-Dimethyl-diphenyl-diisocyanat, 1,2-Diphenylethan-diisocyanat und/oder Phenylendiisocyanat. Bevorzugte aromatische Diisocyanate sind 2,2'-, 2,4'- und/oder 4,4'-Diphenylmethandiisocyanat (MDI) und deren Mischungen.

Beispielsweise ist das Diisocyanat (I1) ausgewählt aus der Gruppe bestehend aus Methylendiphenyldiisocyanat (MDI), Hexamethylen-1,6-diisocyanat (HDI), 1,5-Naphthylendiisocyanat (NDI), 2,4- und/oder 2,6-Toluylendiisocyanat (TDI), 3,3,'-Dimethyl-4,4'-Diisocyanato-Diphenyl (TODI), p-Phenylendiisocyanat (PDI), 1-Isocyanato-3,3,5-trimethyl-5-isocyanatomethyl-cyclohexan (Isophoron-diisocyanat, IPDI) und 4,4'-, 2,4'- und 2,2'-Methylendicyclohexyldiisocyanat (H12MDI).

Erfindungsgemäß können auch höherfunktionelle Isocyanate eingesetzt werden. Bevorzugte Beispiele für höherfunktionelle Isocyanate sind Triisocyanate, z. B. Triphenylmethan-4,4',4"-triisocyant, weiterhin die Cyanurate der vorgenannten Diisocyanate, sowie die durch partielle Umsetzung von Diisocyanaten mit Wasser erhältlichen Oligomere, z. B. die Biurete der vorgenannten Diisocyanate, ferner Oligomere, die durch gezielte Umsetzung von semiblockierten Diisocyanaten mit Polyolen, die im Mittel mehr als 2 und vorzugsweise 3 oder mehr Hydroxy-Gruppen aufweisen, erhältlich sind.

Erfindungsgemäß kann das Diisocyanat (I1) in reiner Form oder in Form einer Zusammensetzung enthaltend das Diisocyanat und mindestens ein Lösungsmittel eingesetzt werden. Geeignete Lösungsmittel sind dem Fachmann bekannt. Geeignet sind beispielsweise nicht reaktive Lösungsmittel wie Ethylacetat, Methylethylketon, Tetrahydrofuran und Kohlenwasserstoffe.

Erfindungsgemäß wird die Isocyanatzusammensetzung (IZ) mit der Polyolzusammensetzung (PZ) umgesetzt. Die Polyolzusammensetzung enthält dabei im Rahmen der vorliegenden Erfindung ein oder mehrere Polyole. Erfindungsgemäß kann die Polyolzusammensetzung auch weitere Komponenten, beispielsweise Lösungsmittel oder Kettenverlängerer enthalten.

Geeignete Polyole sind dem Fachmann an sich bekannt. Im Rahmen der vorliegenden Erfindung können als Polyole insbesondere allgemein bekannte Polyhydroxylverbindungen mit Molekulargewichten von 500 bis 8000, bevorzugt 600 bis 6000, insbesondere 800 bis 4000, und bevorzugt einer mittleren Funktionalität von 1,8 bis 2,6, bevorzugt 1,9 bis 2,2, insbesondere 2 eingesetzt werden, beispielsweise Polyesterole, Polyetherole und/oder Polycarbonatdiole.

Gemäß einer weiteren Ausführungsform betrifft die vorliegende Erfindung demgemäß auch ein Verfahren wie zuvor beschrieben, wobei die Polyolzusammensetzung (PZ) mindestens ein Polyol ausgewählt aus der Gruppe bestehend aus Polycarbonatdiolen, Polyethern und Polyestern enthält.

Geeignete Polyole sind dem Fachmann grundsätzlich bekannt und beispielsweise beschrieben im "Kunststoffhandbuch, Band 7, Polyurethane", Carl Hanser Verlag, 3. Auflage 1993, Kapitel 3.1. Besonders bevorzugt werden als weitere Polyole Polyesterole oder Polyetherole eingesetzt. Besonders bevorzugt sind Polyetherpolyole. Das zahlenmittlere Molekulargewicht der erfindungsgemäß eingesetzten Polyole liegen vorzugsweise zwischen 250 g/mol und 2000 g/mol, bevorzugt zwischen 500 g/mol und 1500 g/mol, insbesondere zwischen 650 g/mol und 1000 g/mol.

Bevorzugte Polyetherole sind erfindungsgemäß Polyethyleneglykole und Polytetrahydrofurane. Beispielsweise können erfindungsgemäß auch Mischungen verschiedener Polytetrahydrofurane eingesetzt werden, die sich im Molekulargewicht unterscheiden.

Beispielsweise geeignet ist ein Polytetrahydrofuran (PTHF) mit einem Molekulargewicht Mn im Bereich von 200 g/mol bis 2000 g/mol, weiter bevorzugt im Bereich von 250 g/mol bis 1500 g/mol, weiter bevorzugt im Bereich von 500 g/mol bis 1000 g/mol.

Erfindungsgemäß sind neben PTHF auch andere weitere Polyether geeignet, oder auch Polyester.

Bevorzugt werden als Polyesterdiole Verbindungen eingesetzt, die erhältlich sind durch Umsetzung von Butandiol und Hexandiol als Diol mit Adipinsäure als Dicarbonsäure. Geeignete Polyesterdiole weisen beispielsweise ein Molekulargewicht im Bereich von 600 bis 4000 g/mol, bevorzugt 800 bis 2500 g/mol, besonders bevorzugt 1800 bis 2200 g/mol, auf.

Gemäß einer Ausführungsform der vorliegenden Erfindung wird ein Polycarbonatdiol oder ein Polytetrahydrofuranpolyol eingesetzt. Geeignete Polytetrahydrofuranpolyole weisen beispielsweise ein Molekulargewicht im Bereich von 500 bis 5000 g/mol, bevorzugt 500 bis 2000 g/mol, besonders bevorzugt 800 bis 1200 g/mol, auf.

Geeignete Polycarbonatdiole sind beispielsweise Polycarbonatdiole, die auf Alkandiolen basieren. Geeignete Polycarbonatdiole sind streng difunktionelle OH-funktionelle Polycarbonatdiole, bevorzugt streng difunktionelle OH-funktionelle aliphatische Polycarbonatdiole. Geeignete Polycarbonatdiole basieren beispielsweise auf 1,4-Butandiol, 1,5-Pentandiol oder 1,6-Hexandiol, insbesondere 1,4-Butandiol, 1,5-Pentandiol, 1,6-Hexandiol, 3-Methylpentan-(1,5)-diol oder Mischungen davon, besonders bevorzugt 1,4-Butandiol, 1,5-Pentandiol, 1,6-Hexandiol oder Mischungen davon. Bevorzugt werden im Rahmen der vorliegenden Erfindung Polycarbonatdiole basierend auf 1,4-Butandiol und 1,6-Hexandiol, Polycarbonatdiole basierend auf 1,5-Pentandiol und 1,6-Hexandiol, Polycarbonatdiole basierend auf 1,6-Hexandiol, und Mischungen aus zwei oder mehr dieser Polycarbonatdiole eingesetzt.

Vorzugsweise weisen die eingesetzten Polycarbonatdiole ein zahlenmittleres Molekulargewicht Mn im Bereich von 500 bis 4000 g/mol, bestimmt über GPC, bevorzugt im Bereich von 650 bis 3500 g/mol, bestimmt über GPC, besonders bevorzugt im Bereich von 800 bis 3000 g/mol, bestimmt über GPC, auf.

Die Polyolzusammensetzung (PZ) kann im Rahmen der vorliegenden Erfindung weitere Polyole enthalten, beispielsweise auch Kettenverlängerer. Erfindungsgemäß wird bevorzugt ein Kettenverlängerer mit einem Molekulargewicht < 500 g/mol eingesetzt. Im Rahmen der vorliegenden Erfindung handelt es sich hierbei um das gewichtsmittlere Molekulargewicht. Als Kettenverlängerer können im Rahmen der vorliegenden Erfindung beispielsweise Verbindungen mit Hydroxyl- oder Amino-Gruppen eingesetzt werden, insbesondere mit 2 Hydroxyl- oder Amino-Gruppen. Erfindungsgemäß ist es jedoch auch möglich, dass Gemische verschiedener Verbindungen als Kettenverlängerer eingesetzt werden. Dabei ist erfindungsgemäß die mittlere Funktionalität der Mischung 2.

Gemäß einer weiteren Ausführungsform betrifft die vorliegende Erfindung demgemäß auch ein Verfahren wie zuvor beschrieben, wobei die Polyolzusammensetzung (PZ) mindestens einen Kettenverlängerer ausgewählt aus der Gruppe bestehend aus Diolen, Diaminen und Aminoalkoholen enthält.

Erfindungsgemäß bevorzugt werden als Kettenverlängerer Verbindungen mit Hydroxylgruppen eingesetzt, insbesondere Diole. Dabei können bevorzugt aliphatische, araliphatische, aromatische und/oder cycloaliphatische Diole mit einem Molekulargewicht von 50 g/mol bis 220 g/mol eingesetzt werden. Bevorzugt sind Alkandiole mit 2 bis 10 C-Atomen im Alkylenrest, insbesondere Di-, Tri-, Tetra-, Penta-, Hexa-, Hepta-, Okta-, Nona- und/oder Dekaalkylenglykole. Für die vorliegende Erfindung sind besonders bevorzugt 1,2-Ethylenglykol, 1,3-Propandiol, 1,4-Butandiol, 1,6-Hexandiol. Auch aromatische Verbindungen wie Hydroxychinon(bis(2-hydroxyethyl)ether können eingesetzt werden.

Erfindungsgemäß können auch Verbindungen mit Amino-Gruppen eingesetzt werden, beispielsweise Diamine. Ebenso können Gemische von Diolen und Diaminen eingesetzt werden.

Bevorzugt ist der Kettenverlängerer ein Diol mit einem Molekulargewicht Mw < 220 g/mol. Erfindungsgemäß ist es möglich, dass lediglich ein Diol mit einem Molekulargewicht Mw < 220 g/mol zur Herstellung des transparenten, thermoplastischen Polyurethans eingesetzt wird.

Gemäß einer weiteren Ausführungsform werden mehr als ein Diol als Kettenverlängerer eingesetzt. Es können somit auch Mischungen von Kettenverlängerern eingesetzt werden.

Gemäß einer weiteren Ausführungsform betrifft die vorliegende Erfindung demgemäß ein Verfahren wie zuvor beschrieben, wobei als Kettenverlängerer ein Diol mit einem Molekulargewicht Mw < 220 g/mol eingesetzt wird.

Der Kettenverlängerer wird vorzugsweise in einer Menge eingesetzt, sodass das molare Verhältnis aus der Summe der Funktionalitäten der Komponenten der eingesetzten Polyolzusammensetzung (PZ) und Kettenverlängerer zu der Summe der Funktionalitäten der eingesetzten Isocyanatzusammensetzung (IZ) im Bereich von 1 zu 0,8 bis 1 zu 1,3 liegt, weiter bevorzugt im Bereich von 1 zu 0,9 bis 1 zu 1,2, beispielsweise im Bereich von 1 zu 0,95 bis 1 zu 1,15.

Demgemäß betrifft die vorliegende Erfindung gemäß einer weiteren Ausführungsform auch ein thermoplastisches Polyurethan wie zuvor beschrieben, wobei das molare Verhältnis aus der Summe der Funktionalitäten der Komponenten der eingesetzten Polyolzusammensetzung (PZ) und Kettenverlängerer zu der Summe der Funktionalitäten der eingesetzten Isocyanatzusammensetzung (IZ) im Bereich von 1 zu 0,8 bis 1 zu 1,3 liegt.

Zur Einstellung der Härte der thermoplastischen Polyurethane können die eingesetzten Mengen der Aufbaukomponenten in relativ breiten molaren Verhältnissen variiert werden.

Zur Herstellung der erfindungsgemäßen thermoplastischen Polyurethane werden die die Isocyanatzusammensetzung und die Polyolzusammensetzung (PZ) gegebenenfalls in Gegenwart von Katalysatoren und gegebenenfalls Hilfsmitteln und/oder zur Reaktion gebracht.

Dabei ist es im Rahmen der vorliegenden Erfindung möglich, dass ein geeigneter Katalysator vor oder nach der Umsetzung im Statikmischer (S1) zugesetzt wird. Erfindungsgemäß ist es auch möglich, dass ein Teil der Gesamtmenge des eingesetzten Katalysators vor der Umsetzung im Statikmischer (S1) zugesetzt wird und ein weiterer Teil, beispielsweise der verbleibende Teil der Gesamtmenge des eingesetzten Katalysators nach der Umsetzung im Statikmischer (S1) zugesetzt wird.

Gemäß einer weiteren Ausführungsform betrifft die vorliegende Erfindung demgemäß auch ein Verfahren wie zuvor beschrieben, wobei vor und/oder nach der Umsetzung im Statikmischer (S1) ein Katalysator zugesetzt wird.

Gemäß einer weiteren Ausführungsform betrifft die vorliegende Erfindung somit auch ein Verfahren wie zuvor beschrieben, wobei vor der Umsetzung im Statikmischer (S1) ein Katalysator zugesetzt wird. Weiterhin betrifft die vorliegende Erfindung gemäß einer weiteren Ausführungsform demgemäß auch ein Verfahren wie zuvor beschrieben, wobei nach der Umsetzung im Statikmischer (S1) ein Katalysator zugesetzt wird. Ebenso betrifft die vorliegende Erfindung gemäß einer weiteren Ausführungsform auch ein Verfahren wie zuvor beschrieben, wobei vor und nach der Umsetzung im Statikmischer (S1) ein Katalysator zugesetzt wird.

Geeignete Katalysatoren sind dem Fachmann an sich bekannt. Geeignet sind beispielsweise tertiären Amine, wie z.B. Triethylamin, Dimethylcyclohexylamin, N-Methylmorpholin, N,N'-Dimethylpiperazin, 2-(Dimethylamino-ethoxy)-ethanol, Diazabicyclo-(2,2,2)-octan und ähnliche sowie insbesondere organische Metallverbindungen wie Titansäureester, Eisenverbindungen, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Bevorzugte Katalysatoren sind organische Metallverbindungen, insbesondere Titansäureester, Eisen- und/oder Zinnverbindungen. Geeignete Katalysatoren für die Umsetzung gemäß Schritt (a) sind beispielsweise Tributylzinnoxid, Zinn(II)-Dioctoat, Dibutylzinndilaurat oder Bi(III)-Carboxylate.

Erfindungsgemäß kann die eingesetzte Menge an Katalysator in breiten Bereichen variieren. Geeignete Mengen liegen beispielsweise im Bereich von 50 bis 1000 ppm, bevorzugt im Bereich von 50 bis 800 ppm, weiter bevorzugt im Bereich von 100 bis 600 ppm, jeweils bezogen auf die Gesamtmenge der eingesetzten Komponenten.

Gemäß einer weiteren Ausführungsform betrifft die vorliegende Erfindung demgemäß auch ein Verfahren wie zuvor beschrieben, wobei die Katalysatorzusammensetzung in einer Menge von 50 bis 1000 ppm eingesetzt wird, bezogen auf die Gesamtmenge der eingesetzten Komponenten.

Neben Katalysatoren können bei der Umsetzung auch übliche Hilfsstoffe hinzugefügt werden. Genannt seien beispielsweise oberflächenaktive Substanzen, Füllstoffe, weitere Flammschutzmittel, Keimbildungsmittel, Oxidationsstabilisatoren, Gleit- und Entformungshilfen, Farbstoffe und Pigmente, gegebenenfalls Stabilisatoren, z.B. gegen Hydrolyse, Licht, Hitze oder Verfärbung, anorganische und/oder organische Füllstoffe, Verstärkungsmittel und Weichmacher. Geeignete Hilfs- und Zusatzstoffe können beispielsweise dem Kunststoffhandbuch, Band VII, herausgegeben von Vieweg und Höchtlen, Carl Hanser Verlag, München 1966 (S. 103-113) entnommen werden.

Geeignete Hilfsmittel und/oder Zusatzstoffe können beispielsweise in einer Menge bis zu 20 Gew.-%, bezogen auf die Gesamtmenge der eingesetzten Komponenten, zugesetzt werden. Sie können in einer der Reaktionskomponenten, vorzugsweise in der Polyol-Komponente gelöst werden oder auch ggf. nach erfolgter Reaktion in einem nachgeschalteten Mischaggregat, wie z.B. einem Extruder, zudosiert werden.

Erfindungsgemäß erfolgt die Umsetzung der Isocyanatzusammensetzung (IZ) und der Polyolzusammensetzung (PZ) in mindestens zwei in Reihe geschalteten Statikmischern. Die Bedingungen bei der Umsetzung werden typischerweise so gewählt, dass das erhaltene thermoplastische Polyurethan eine Viskosität aufweist, die eine Unterwassergranulierung ermöglicht. Geeignete Viskositäten liegen beispielsweise im Bereich von 50 Pas bis 150 Pas, bevorzugt im Bereich von 60 Pas bis 120 Pas, weiter bevorzugt im Bereich von 70 Pas bis 110 Pas.

Das erfindungsgemäße Verfahren umfasst gemäß einer bevorzugten Ausführungsform weiterhin Schritt (iii). Gemäß Schritt (iii) wird ein Granulat aus der gemäß Schritt (ii) erhaltenen Schmelze hergestellt. Im Rahmen der vorliegenden Erfindung können dabei aller geeigneten Verfahren eingesetzt werden, um aus der Schmelze ein Granulat herzustellen. Geeignete Verfahren sind dem Fachmann an sich bekannt. Als vorteilhaft hat sich im Rahmen der vorliegenden Erfindung Unterwassergranulieren oder Stranggranulieren erwiesen. Dabei ist es vorteilhaft, dass die eingesetzten Katalysatoren bei Kontakt mit Wasser weiter aktiv bleiben, so dass auch im erhaltenen Granulat eine katalytisch beschleunigte Weiterreaktion erfolgen kann.

Gemäß einer weiteren Ausführungsform betrifft die vorliegende Erfindung daher ein Verfahren zur Herstellung eines thermoplastischen Polyurethans wie zuvor beschrieben, wobei die Herstellung gemäß Schritt (iii) mittels Unterwassergranulieren oder Stranggranulieren erfolgt.

Erfindungsgemäß wird das thermoplastische Polyurethan üblicherweise in Form eines Granulats erhalten.

Erfindungsgemäß wird insbesondere ein thermoplastisches Polyurethan erhalten, das ein Molekulargewicht im Bereich von 70000 bis 100000 aufweist, bevorzugt im Bereich von 80000 bis 100000, weiter bevorzugt im Bereich von 85000 bis 100000. Soweit nicht anders angegeben erfolgt im Rahmen der vorliegenden Erfindung die Bestimmung des mittleren Molekulargewichts Mn der eingesetzen Polyole über die OH-Zahl.

Gemäß einem weiteren Aspekt betrifft die vorliegende Erfindung auch ein thermoplastisches Polyurethan erhalten oder erhältlich gemäß einem Verfahren wie zuvor beschrieben.

Gemäß einem weiteren Aspekt betrifft die vorliegende Erfindung auch ein thermoplastisches Polyurethan erhalten oder erhältlich gemäß einem Verfahren zur Herstellung eines thermoplastischen Polyurethans umfassend die Umsetzung einer Isocyanatzusammensetzung (IZ) enthaltend ein Diisocyanat (I1) mit einer Polyolzusammensetzung (PZ), wobei die Umsetzung in mindestens zwei in Reihe geschalteten Statikmischern erfolgt und der erste Statikmischer (S1) einen Durchmesser (d1) aufweist und der zweite Statikmischer (S2) einen Durchmesser (d2), wobei der Durchmesser (d2) größer ist als der Durchmesser (d1).

Bezüglich der bevorzugten Ausführungsformen wird auf die obigen Ausführungen bezüglich des Verfahrens verwiesen.

Erfindungsgemäß können die Eigenschaften der erhaltenen thermoplastischen Polyurethane durch die Wahl der eingesetzten Diisocyanate, Polyole und Kettenverlängerer beeinflusst werden. Vorteilhafterweise weist das erfindungsgemäße thermoplastische Polyurethan eine Shore Härte im Bereich von 50 A bis 80 D auf, bestimmt gemäß DIN ISO 7619-1 (3s), weiter bevorzugt eine Shore Härte im Bereich von 60A bis 98A, besonders bevorzugt eine Shore Härte im Bereich von-65A bis 90 A, jeweils bestimmt gemäß DIN ISO 7619-1 (3s).

Demgemäß betrifft die vorliegende Erfindung gemäß einer weiteren Ausführungsform auch ein thermoplastisches Polyurethan wie zuvor beschrieben, wobei das thermoplastische Polyurethan eine Shore Härte im Bereich von 50 A bis 80 D aufweist, bestimmt gemäß DIN ISO 7619-1 (3s).

Vorzugsweise sind die erfindungsgemäßen thermoplastischen Polyurethane opak bis transparent. Demgemäß betrifft die vorliegende Erfindung gemäß einer weiteren Ausführungsform auch ein thermoplastisches Polyurethan wie zuvor beschrieben, wobei das thermoplastische Polyurethan opak bis transparent ist.

Die Verarbeitung der erhaltenen thermoplastischen Polyurethane kann gemäß üblichen Verfahren erfolgen, beispielsweise auf Extrudern, Spritzgussmaschinen, Blasformen, Kalandern, Knetern und Pressen.

Aufgrund der guten mechanischen Eigenschaften und des guten Temperaturverhaltens sind die erfindungsgemäßen thermoplastischen Polyurethane insbesondere zur Herstellung von Spritzgussprodukten, Extrusionsprodukten, Folien, Profile und Formkörpern geeignet.

Gemäß einem weiteren Aspekt betrifft die vorliegende Erfindung auch die Verwendung eines erfindungsgemäßen thermoplastischen Polyurethans oder eines thermoplastischen Polyurethans erhältlich oder erhalten nach einem erfindungsgemäßen Verfahren zur Herstellung von Spritzgussprodukten, Extrusionsprodukten, Folien, Profile und Formkörpern.

Die erfindungsgemäß erhaltenen thermoplastischen Polyurethane eigenen sich für eine Vielzahl von Anwendungen. Die Verarbeitung der erfindungsgemäß hergestellten thermoplastischen Polyurethane zu den gewünschten Kunststoffteilen oder Folien kann beispielsweisedurch allgemein bekannte Extrusion, durch üblichen Spritzguss oder auch andere an sich bekannte Verfahren erfolgen.

Die erfindungsgemäßen thermoplastischen Polyurethane werden insbesondere zur Herstellung von Formkörpern durch Spritzguß-, Extrusions- oder Sinterverfahren oder zur Beschichtung von Formkörpern eingesetzt. Sie können damit beispielsweise zur Herstellung von Folien oder von Spritzgießteilen eingesetzt werden. Besonders bevorzugt erfolgt der Einsatz der Formkörper im Automobil(innen)bereich sowie im Maschinenbau-, Möbel-, Sport- und Freizeitbereich. Dabei sind die Formkörper bevorzugt Ausbauteile im Automobiiinnenbereich, wie Armaturenbretter, Türenverkleidungen oder Lenkradumhüllungen.

Die erhaltenen thermoplastischen Polyurethane weisen eine hohe Lichtechtheit und geringe Gelbgrade auf. Somit eigenen sie sich insbesondere zur Herstellung von Extrusionsprodukten, beispielsweise zur Herstellung von Folien, Profilen, Kabeln, sowie Ummantelungen, beispielsweise von LED Bändern, Steinschlagschutzfolien oder auch Laminatbeschichtungen.

Die vorliegende Erfindung betrifft somit auch die Verwendung eines thermoplastischen Polyurethans erhalten oder erhältlich gemäß einem Verfahren wie zuvor beschrieben oder eines thermoplastischen Polyurethans wie zuvor beschrieben zur Herstellung von Extrusionsprodukten, beispielsweise zur Herstellung von Folien, Profilen, Kabeln, sowie Ummantelungen, beispielsweise von LED Bändern, Steinschlagschutzfolien oder auch Laminatbeschichtungen.

Weitere Ausführungsformen der vorliegenden Erfindung sind den Ansprüchen und den Beispielen zu entnehmen. Es versteht sich, dass die vorstehend genannten und die nachstehend erläuterten Merkmale des erfindungsgemäßen Gegenstandes/Verfahren/Verwendungen nicht nur in der jeweils angegebenen Kombination, sondern auch in anderen Kombinationen verwendbar sind, ohne den Rahmen der Erfindung zu verlassen. So ist z. B. auch die Kombination von einem bevorzugten Merkmal mit einem besonders bevorzugten Merkmal, oder eines nicht weiter charakterisierten Merkmals mit einem besonders bevorzugten Merkmal etc. implizit umfasst auch wenn diese Kombination nicht ausdrücklich erwähnt wird.

Im Folgenden sind beispielhafte Ausführungsformen der vorliegenden Erfindung aufgeführt, wobei diese die vorliegende Erfindung nicht einschränken. Insbesondere umfasst die vorliegende Erfindung auch solche Ausführungsformen, die sich aus den im Folgenden angegebenen Rückbezügen und damit Kombinationen ergeben. Insbesondere wird darauf hingewiesen, dass sofern ein Bereich von Ausführungsformen erwähnt wird, beispielsweise im Zusammenhang mit dem Ausdruck "gemäß einer der Ausführungsformen 1 bis 4", jede der Ausführungsformen in diesem Bereich explizit offenbart sein soll. Die Formulierung wird als für den Fachmann synonym zu dem Ausdruck "gemäß einer der Ausführungsformen 1, 2, 3 und 4" angesehen. Es wird explizit festgestellt, dass die folgenden Ausführungsformen nicht die Patentansprüche darstellen, sondern einen strukturierten Teil der Beschreibung, der allgemeine und bevorzugte Aspekte der vorliegenden Erfindung betrifft.
1. Verfahren zur Herstellung eines thermoplastischen Polyurethans umfassend die Umsetzung einer Isocyanatzusammensetzung (IZ) enthaltend ein Diisocyanat (I1) mit einer Polyolzusammensetzung (PZ), wobei die Umsetzung in mindestens zwei in Reihe geschalteten Statikmischern erfolgt und der erste Statikmischer (S1) einen Durchmesser (d1) aufweist und der zweite Statikmischer (S2) einen Durchmesser (d2), wobei der Durchmesser (d2) größer ist als der Durchmesser (d1).
2. Verfahren nach Ausführungsform 1, wobei der Durchmesser (d2) mindestens um 30% größer ist als der Durchmesser (d1).
3. Verfahren nach einer der Ausführungsformen 1 oder 2, wobei das Verfahren die Schritte (i) bis (iii) umfasst:
   (i) Mischen der Isocyanatzusammensetzung (IZ) enthaltend ein Diisocyanat (I1) und der Polyolzusammensetzung (PZ);
   (ii.1) Umsetzung der Mischung (M1) in dem ersten Statikmischer (S1) unter Erhalt einer Mischung (M2);
   (ii.2) Umsetzung der Mischung (M2) in dem Statikmischer (S2) unter Erhalt einer Mischung (M3);
   (ii) Granulieren der in Schritt (ii) erhaltenen Mischung.
4. Verfahren nach einer der Ausführungsformen 1 bis 3, wobei ein dritter Statikmischer (S3) mit einem Durchmesser (d3) eingesetzt wird.
5. Verfahren nach einer der Ausführungsformen 3 oder 4, wobei Schritt (i) bei einer Temperatur im Bereich von 45 bis 70°C durchgeführt wird.
6. Verfahren nach einer der Ausführungsformen 1 bis 5, wobei die Temperatur im Statikmischer (S1) im Bereich von 70 bis 170°C liegt und die Temperatur im Statikmischer (S2) im Bereich von 130 bis 170°C.
7. Verfahren nach einer der Ausführungsformen 1 bis 6, wobei das Diisocyanat (I1) ausgewählt ist aus der Gruppe bestehend aus aliphatischen und alicyclischen Diisocyanaten.
8. Verfahren nach einer der Ausführungsformen 1 bis 7, wobei die Polyolzusammensetzung (PZ) mindestens ein Polyol ausgewählt aus der Gruppe bestehend aus Polycarbonatdiolen, Polyethern und Polyestern enthält.
9. Verfahren nach einer der Ausführungsformen 1 bis 8, wobei die Polyolzusammensetzung (PZ) mindestens einen Kettenverlängerer ausgewählt aus der Gruppe bestehend aus Diolen, Diaminen und Aminoalkoholen enthält.
10. Verfahren nach einer der Ausführungsformen 1 bis 9, wobei vor und/oder nach der Umsetzung im Statikmischer (S1) ein Katalysator zugesetzt wird.
11. Verfahren nach Ausführungsform 10, wobei die Katalysatorzusammensetzung in einer Menge von 50 bis 1000 ppm eingesetzt wird, bezogen auf die Gesamtmenge der eingesetzten Komponenten.
12. Verfahren zur Herstellung eines thermoplastischen Polyurethans umfassend die Umsetzung einer Isocyanatzusammensetzung (IZ) enthaltend ein Diisocyanat (I1) mit einer Polyolzusammensetzung (PZ), wobei die Umsetzung in mindestens zwei in Reihe geschalteten Statikmischern erfolgt und der erste Statikmischer (S1) einen Durchmesser (d1) aufweist und der zweite Statikmischer (S2) einen Durchmesser (d2), wobei der Durchmesser (d2) größer ist als der Durchmesser (d1),
   wobei der Durchmesser (d2) mindestens um 30% größer ist als der Durchmesser (d1).
13. Verfahren nach Ausführungsform 12, wobei das Verfahren die Schritte (i) bis (iii) umfasst:
   (i) Mischen der Isocyanatzusammensetzung (IZ) enthaltend ein Diisocyanat (I1) und der Polyolzusammensetzung (PZ);
   (ii.1) Umsetzung der Mischung (M1) in dem ersten Statikmischer (S1) unter Erhalt einer Mischung (M2);
   (ii.2) Umsetzung der Mischung (M2) in dem Statikmischer (S2) unter Erhalt einer Mischung (M3);
   (ii) Granulieren der in Schritt (ii) erhaltenen Mischung.
14. Verfahren nach einer der Ausführungsformen 12 oder 13, wobei ein dritter Statikmischer (S3) mit einem Durchmesser (d3) eingesetzt wird.
15. Verfahren nach Ausführungsform 14, wobei der Durchmesser (d3) mindestens um 30% größer ist als der Durchmesser (d2).
16. Verfahren nach einer der Ausführungsformen 14 oder 15, wobei das Verfahren die Schritte (i) bis (iii) umfasst:
   (i) Mischen der Isocyanatzusammensetzung (IZ) enthaltend ein Diisocyanat (I1) und der Polyolzusammensetzung (PZ);
   (ii.1) Umsetzung der Mischung (M1) in dem ersten Statikmischer (S1) unter Erhalt einer Mischung (M2);
   (ii.2) Umsetzung der Mischung (M2) in dem Statikmischer (S2) unter Erhalt einer Mischung (M3);
   (ii.3) Umsetzung der Mischung (M3) in dem Statikmischer (S3) unter Erhalt einer Mischung (M4);
   (iii) Granulieren der in Schritt (ii) erhaltenen Mischung.
17. Verfahren zur Herstellung eines thermoplastischen Polyurethans umfassend die Umsetzung einer Isocyanatzusammensetzung (IZ) enthaltend ein Diisocyanat (I1) mit einer Polyolzusammensetzung (PZ), wobei die Umsetzung in mindestens zwei in Reihe geschalteten Statikmischern erfolgt und der erste Statikmischer (S1) einen Durchmesser (d1) aufweist und der zweite Statikmischer (S2) einen Durchmesser (d2), wobei der Durchmesser (d2) größer ist als der Durchmesser (d1),
   wobei der Durchmesser (d2) mindestens um 30% größer ist als der Durchmesser (d1) und das Verfahren die Schritte (i) bis (iii) umfasst:
   (i) Mischen der Isocyanatzusammensetzung (IZ) enthaltend ein Diisocyanat (I1) und der Polyolzusammensetzung (PZ);
   (ii.1) Umsetzung der Mischung (M1) in dem ersten Statikmischer (S1) unter Erhalt einer Mischung (M2);
   (ii.2) Umsetzung der Mischung (M2) in dem Statikmischer (S2) unter Erhalt einer Mischung (M3);
   (iii) Granulieren der in Schritt (ii) erhaltenen Mischung.
18. Verfahren zur Herstellung eines thermoplastischen Polyurethans umfassend die Umsetzung einer Isocyanatzusammensetzung (IZ) enthaltend ein Diisocyanat (I1) mit einer Polyolzusammensetzung (PZ), wobei die Umsetzung in mindestens zwei in Reihe geschalteten Statikmischern erfolgt und der erste Statikmischer (S1) einen Durchmesser (d1) aufweist und der zweite Statikmischer (S2) einen Durchmesser (d2), wobei der Durchmesser (d2) größer ist als der Durchmesser (d1),
   wobei ein dritter Statikmischer (S3) mit einem Durchmesser (d3) eingesetzt wird, und der Durchmesser (d3) mindestens um 30% größer ist als der Durchmesser (d2),
   wobei das Verfahren die Schritte (i) bis (iii) umfasst:
   (i) Mischen der Isocyanatzusammensetzung (IZ) enthaltend ein Diisocyanat (I1) und der Polyolzusammensetzung (PZ);
   (ii.1) Umsetzung der Mischung (M1) in dem ersten Statikmischer (S1) unter Erhalt einer Mischung (M2);
   (ii.2) Umsetzung der Mischung (M2) in dem Statikmischer (S2) unter Erhalt einer Mischung (M3);
   (ii.3) Umsetzung der Mischung (M3) in dem Statikmischer (S3) unter Erhalt einer Mischung (M4);
   (iii) Granulieren der in Schritt (ii) erhaltenen Mischung.
19. Verfahren nach einer der Ausführungsformen 13 bis 18, wobei Schritt (i) bei einer Temperatur im Bereich von 45 bis 70°C durchgeführt wird.
20. Verfahren nach einer der Ausführungsformen 12 bis 19, wobei die Temperatur im Statikmischer (S1) im Bereich von 70 bis 170°C liegt und die Temperatur im Statikmischer (S2) im Bereich von 130 bis 170°C.
21. Verfahren nach einer der Ausführungsformen 12 bis 20, wobei das Diisocyanat (I1) ausgewählt ist aus der Gruppe bestehend aus aliphatischen und alicyclischen Diisocyanaten.
22. Verfahren nach einer der Ausführungsformen 12 bis 21, wobei die Polyolzusammensetzung (PZ) mindestens ein Polyol ausgewählt aus der Gruppe bestehend aus Polycarbonatdiolen, Polyethern und Polyestern enthält.
23. Verfahren nach einer der Ausführungsformen 12 bis 22, wobei die Polyolzusammensetzung (PZ) mindestens einen Kettenverlängerer ausgewählt aus der Gruppe bestehend aus Diolen, Diaminen und Aminoalkoholen enthält.
24. Verfahren nach einer der Ausführungsformen 12 bis 23, wobei vor der Umsetzung im Statikmischer (S1) ein Katalysator zugesetzt wird.
25. Verfahren nach einer der Ausführungsformen 12 bis 23, wobei nach der Umsetzung im Statikmischer (S1) ein Katalysator zugesetzt wird.
26. Verfahren nach einer der Ausführungsformen 12 bis 23, wobei vor und nach der Umsetzung im Statikmischer (S1) ein Katalysator zugesetzt wird.
27. Verfahren nach einer der Ausführungsformen 24 bis 26, wobei die Katalysatorzusammensetzung in einer Menge von 50 bis 1000 ppm eingesetzt wird, bezogen auf die Gesamtmenge der eingesetzten Komponenten.
28. Thermoplastisches Polyurethan erhalten oder erhältlich gemäß einem Verfahren nach einer der Ausführungsformen 1 bis 27.
29. Verwendung eines thermoplastischen Polyurethans erhalten oder erhältlich gemäß einem Verfahren nach einer der Ausführungsformen 1 bis 27 oder eines thermoplastischen Polyurethans gemäß Ausführungsform 28 zur Herstellung von Extrusionsprodukten, beispielsweise zur Herstellung von Folien, Profilen, Kabeln, sowie Ummantelungen, beispielsweise von LED Bändern, Steinschlagschutzfolien oder Laminatbeschichtungen.

### Zitierte Literatur

DE 19625987 A1
EP 1 010 712 A1
Chem.-Ing. Techn. 52, Nr.4 auf den Seiten 285-291
"Mischen von Kunststoff und Kautschukprodukten", VDI-Verlag, Düsseldorf 1993 DE 23 28 795 A1
Kunststoffhandbuch, Band VII, herausgegeben von Vieweg und Höchtlen, Carl Hanser Verlag, München 1966 (S. 103-113)

## Patentansprüche

1. Verfahren zur Herstellung eines thermoplastischen Polyurethans umfassend die Umsetzung einer Isocyanatzusammensetzung (IZ) enthaltend ein Diisocyanat (I1) mit einer Polyolzusammensetzung (PZ), wobei die Umsetzung in mindestens zwei in Reihe geschalteten Statikmischern erfolgt und der erste Statikmischer (S1) einen Durchmesser (d1) aufweist und der zweite Statikmischer (S2) einen Durchmesser (d2), wobei der Durchmesser (d2) größer ist als der Durchmesser (d1).

2. Verfahren nach Anspruch 1, wobei der Durchmesser (d2) mindestens um 30% größer ist als der Durchmesser (d1).

3. Verfahren nach einem der Ansprüche 1 oder 2, wobei das Verfahren die Schritte (i) bis (iii) umfasst:
(i) Mischen der Isocyanatzusammensetzung (IZ) enthaltend ein Diisocyanat (I1) und der Polyolzusammensetzung (PZ);
(ii.1) Umsetzung der Mischung (M1) in dem ersten Statikmischer (S1) unter Erhalt einer Mischung (M2);
(ii.2) Umsetzung der Mischung (M2) in dem Statikmischer (S2) unter Erhalt einer Mischung (M3);
(ii) Granulieren der in Schritt (ii) erhaltenen Mischung.

4. Verfahren nach einem der Ansprüche 1 bis 3, wobei ein dritter Statikmischer (S3) mit einem Durchmesser (d3) eingesetzt wird.

5. Verfahren nach einem der Ansprüche 3 oder 4, wobei Schritt (i) bei einer Temperatur im Bereich von 45 bis 70°C durchgeführt wird.

6. Verfahren nach einem der Ansprüche 1 bis 5, wobei die Temperatur im Statikmischer (S1) im Bereich von 70 bis 170°C liegt und die Temperatur im Statikmischer (S2) im Bereich von 130 bis 170°C.

7. Verfahren nach einem der Ansprüche 1 bis 6, wobei das Diisocyanat (I1) ausgewählt ist aus der Gruppe bestehend aus aliphatischen und alicyclischen Diisocyanaten.

8. Verfahren nach einem der Ansprüche 1 bis 7, wobei die Polyolzusammensetzung (PZ) mindestens ein Polyol ausgewählt aus der Gruppe bestehend aus Polycarbonatdiolen, Polyethern und Polyestern enthält.

9. Verfahren nach einem der Ansprüche 1 bis 8, wobei die Polyolzusammensetzung (PZ) mindestens einen Kettenverlängerer ausgewählt aus der Gruppe bestehend aus Diolen, Diaminen und Aminoalkoholen enthält.

10. Verfahren nach einem der Ansprüche 1 bis 9, wobei vor und/oder nach der Umsetzung im Statikmischer (S1) ein Katalysator zugesetzt wird.

11. Verfahren nach Anspruch 10, wobei die Katalysatorzusammensetzung in einer Menge im Bereich von 50 bis 1000 ppm eingesetzt wird, bezogen auf die Gesamtmenge der eingesetzten Komponenten.

12. Thermoplastisches Polyurethan erhalten oder erhältlich gemäß einem Verfahren nach einem der Ansprüche 1 bis 11.

13. Verwendung eines thermoplastischen Polyurethans erhalten oder erhältlich gemäß einem Verfahren nach einem der Ansprüche 1 bis 11 oder eines thermoplastischen Polyurethans gemäß Anspruch 12 zur Herstellung von Extrusionsprodukten, beispielsweise zur Herstellung von Folien, Profilen, Kabeln, sowie Ummantelungen, beispielsweise von LED Bändern, Steinschlagschutzfolien oder Laminatbeschichtungen.
